# EUROPÄISCHE PATENTANMELDUNG

(11) **EP 0 784 025 A1**
(43) Veröffentlichungstag der Anmeldung: **16.07.1997**
(21) Anmeldenummer: 96100340.7
(22) Anmeldetag: 11.01.1996
(51) Int. Cl.: B65G 17/06

(54) **Plattenförderband**

(71) Anmelder: MTF Technik Schürfeld GmbH & Co. KG, 51702 Bergneustadt (DE)
(72) Erfinder: Schürfeld, Hans Gert, D-51702 Bergneustadt (DE); Mortsiefer, Bernd, D-51588 Nümbrecht (DE)
(74) Vertreter: Stenger, Watzke & Ring Patentanwälte

(57) **Zusammenfassung**

Um bei einem Plattenförderband (1) mit mindestens zwei endlos umplaufenden Ketten (2,3) aus mittels als Hohlbolzen ausgebildeten Gelenkbolzen verbundenen benachbarten Kettengliedern, und mit an den Ketten mittels Tragbolzen (11) lösbar gelagerten Lastträgern (4-8), vorzugsweise Tragplatten (4-8), wobei die Tragbolzen (11) durch die Hohlbolzen hindurchgeführt und in im Tragplattenstirnkantenbereich ausgebildete Bohrungen (13,14) eingesetzt sind, dahingehend zu verbessern, daß die Bolzenverbindungen herstellungs- und montagetechnisch vereinfacht sind und ein Plattenwechsel (4-8) einfach und schnell durchführbar ist, wir vorgeschlagen, daß Tragbolzen (11) in wenigstens einem Bereich der Bohrungen (13,14) wenigstens gegen Verschiebungen in axialer Richtung fixert sind (17,18,21,24).

## Beschreibung

Die Erfindung betrifft ein Plattenförderband mit mindestens zwei endlos umlaufenden Ketten aus mittels als Hohlbolzen ausgebildeten Gelenkbolzen verbundenen benachbarten Kettengliedern, und mit an den Ketten mittels Tragbolzen lösbar gelagerten Lasträgern, vorzugsweise Tragplatten, wobei die Tragbolzen durch die Hohlbolzen hindurchgeführt und in im Tragplattenstirnkantenbereich ausgebildete Bohrungen eingesetzt sind.

Aus der DE-PS 36 14 559 sind Plattenförderbänder bekannt, bei denen zwischen zwei parallel zueinander angeordneten, endlosen Ketten Lastträger, zum Beispiel biegsame Platten, angeordnet sind. Fest an die Gelenkbolzen der Kette angeformte und als Verbindungselement dienende Bolzen stellen die Verbindung zu den Platten her, wobei die Bolzen an jedem zweiten Gelenkbolzen der beiden Ketten vorgesehen sind. Um die beim Umlauf des Plattenförderbandes entstehende Relativbewegung der Bolzen zueinander auszugleichen, wird je ein Bolzen auf jeder Seite in einem Längsschlitz gelagert. Zur Montage der elastischen Platten lassen sich diese bogenförmig biegen, so daß die dabei entstehende Sehne kürzer ist als die eigentliche Plattenlänge und kürzer als der Abstand der Bolzen voneinander. In diesem Zustand lassen sich die Platten auf die Bolzenpaare aufschieben.

Die durch das Biegen erzielte Längenverkürzung ist daher abhängig von der Elastizität des Plattenmaterials und der Plattenlänge, denn je kürzer die Platte ist, desto größer ist die relative Verformung, die die Platte erfährt. Für Anwendungen, bei denen größere Lasten transportiert werden sollen, bei denen das Plattenförderband extremen Bedingungen, zum Beispiel hohen Temperaturen, ausgesetzt ist oder bei denen nur sehr schmale Plattenförderbänder eingesetzt werden können, kann diese Biegetechnik für eine Montage oder Demontage der Platten nicht angewandt werden.

Aus der DE-PS 40 25 706 ist eine Lösung für dieses Problem bekannt, wobei die Gelenkbolzen, welche benachbarte Kettenglieder verbinden, als Hohlbolzen ausgestaltet sind und zur Befestigung der Tragplatten an den Ketten von außen durch die Hohlbolzen Verbindungselemente gesteckt werden. Dies erleichtert einen Plattenwechsel bei gattungsgemäßen Plattenförderbändern. Als Verbindungselemente werden Bolzen vorgesehen, die auf der einen Seite der Ketten beispielsweise durch Clipelemente an den Ketten befestigt werden, die Hohlbolzen durchragen und mit ihrem freien Ende in Bohrungen in den Tragplatten stecken. Ein Problem der vorbekannten unterschiedlichen Lösungen zur Ausgestaltung der Tragbolzen wurde im Stand der Technik immer wieder überprüft, wie die Tragbolzen an der Kette fixiert werden können, da man davon ausging, daß die in die Tragplatten eingesetzten Bolzenende dort nicht unbeabsichtigt lösbar sind.

Es hat sich jedoch herausgestellt, daß die vorbekannten Tragbolzenbefestigungssysteme produktions- und montagetechnisch immer noch zu aufwendig sind und ein unbeabsichtigtes Auslösen nicht verhindern können. Insbesondere bei flexiblen Platten oder großen Lasten ist eine Relativbewegung zwischen Tragplatten und Kette nicht zu vermeiden, so daß es auch zu teilweisen Auslösungen von Tragbolzen, Verkantungen bis hin zu Beschädigungen kommen kann.

Ausgehend von diesem Stand der Technik liegt der vorliegenden Erfindung die **Aufgabe** zugrunde, ein Plattenförderband der gattungsgemäßen Art dahingehend weiterzubilden, daß die verwendeten Tragbolzen fertigungs- und montagetechnisch einfach sind, ein Plattenaustausch schnell und einfach durchführbar ist und ein unbeabsichtigtes Auslösen vermieden wird.

Zur technischen **Lösung** dieser Aufgabe wird ein gattungsgemäßes Plattenförderband dadurch weitergebildet, daß die Tragbolzen in wenigstens einem Bereich der Bohrungen wenigstens gegen Verschiebungen in axialer Richtung fixiert sind.

Durch die technische erfindungsgemäße Lehre wird ein unbeabsichtigtes Bolzenauslösen verhindert und gleichzeitig der einzelne Tragbolzen fertigungs- und montagetechnisch vereinfacht. Da er nunmehr in einer der plattenseitigen Bohrungen gegen axiale Verschiebungen gesichert ist, braucht er nicht mit aufwendig produzierten Elementen zur Befestigung an der Kette ausgestattet werden. Er kann darüber hinaus einfach von beiden Richtungen durch den Hohlbolzen der Kette geschoben werden, so daß die Montagebedingungen in Abhängigkeit von dem Montageumfeld vereinfacht werden.

In vorteilhafter Weise erfolgt die Fixierung in wenigstens einem Bereich der Bohrungen durch einen Preßsitz. Der Bolzen kann an einem Endbereich eine Rändelung aufweisen, und mit diesem gerändelten Bereich in eine Preßsitzbohrung eingetrieben werden. Gemäß einem weiteren Vorschlag der Erfindung kann innerhalb der Bohrung ein Klemmsteg ausgebildet werden, wobei unter Klemmsteg ein innerhalb der Bohrung ausgebildeter, die lichte Weite der Bohrung verjüngender Widerstand gemeint ist, durch den beim Eintreiben eines Bolzens ein Klemmsitz erzeugt wird.

Innerhalb der Bohrungen können Hinterschneidungen ausgebildet sein, die mit einer bolzenseitigen Ringnut zusammenarbeiten. In besonders vorteilhafter Weise sind die Hinterschneidungen als Hinterschneidungssegmente ausgebildet. Ebenso wie ein Klemmsteg gewährleisten die Hinterschneidungssegmente ein Auslösen des Bolzens aus der Bohrung.

Mit Vorteil wird weiterhin vorgeschlagen, daß das freie Ende des Tragbolzens aus dem Hohlbolzen herausragt. Einerseits steckt der Tragbolzen in einer Bohrung im Stirnsegment, andererseits steckt er im Hohlbolzen. Mit dem erfindungsgemäßen Vorschlag, den Tragbolzen aus dem Hohlbolzen am freien Ende herausragen zu lassen, wird einerseits ein axialer Bewegungsweg zur Verfugung gestellt, andererseits wird die Möglichkeit bereitgestellt, gemäß einem weiteren vorteilhaften Vorschlag der Erfindung den Tragbolzen in einer Kulissenbahn zu führen. Der Tragbolzen kann mit seinem freien, jenseits der Platten aus den, Hohlbolzen herausragenden Ende somit in einer Kulissenbahn geführt werden, die gemäß einem vorteilhaften Vorschlag der Erfindung in einem strangförmigen Führungselement ausgebildet ist. Ein derartiges Führungselement kann beispielsweise im Bereich einer Seitenverkleidung eines Plattenförderbandes ausgebildet oder dort angeordnet sein.

Mit der Erfindung wird vorgeschlagen, daß sich die Tragplatten zumindest im Stirnkantenbereich in Trennfugenregionen scharnierartig überdecken und hier fluchtende Bohrungen für Tragbolzen aufweisen.

In vorteilhafter Weise kann dann eine der Bohrungen zur Bolzenfixierung vorgesehen sein, vorzugsweise die innerste, von der jeweiligen Kette am weitesten entfernte Bohrung. Somit sind die Tragplatten leicht drehbar auf dem Tragbolzen geführt, mit der einzigen Ausnahme, daß die innerste Bohrung den Tragbolzen gegen Axialverschiebung fixiert.

Im Sinne der vorliegenden Erfindung wird unter Sicherung gegen Axialverschiebung ein selbständiges Lösen des Tragbolzens verstanden. Ein toleranzbedingtes oder fertigungsbedingtes Axialspiel soll durch die Erfindung nicht grundsätzlich vermieden werden und auch nicht als Axialverschiebung aufgefaßt werden.

Schließlich wird mit der Erfindung in vorteilhafter Weise vorgeschlagen, daß die Bohrungen in einem sogenannten Stirnsegment ausgebildet sind. Die Erfindung stellt somit in besonders erfindungswesentlicher Weise ein Stirnsegment bereit, welches in der erfindungsgemäßen Weise mittels Tragbolzen lösbar über die Hohlbolzen mit den Ketten verbunden wird. In das Stirnsegment können dann standardisierte Platten unterschiedlicher Art eingesetzt werden, beispielsweise in einfache seitliche Längsnuten des Stirnsegmentes. Werden also auf beiden Seiten des Plattenförderbandes an den beiden Ketten jeweils Stirnsegmente angeordnet und mittels Tragplatten miteinander verbunden, ist das Plattenförderband in höchstem Grade als modulares System aufgebaut und bietet alle Möglichkeiten einer einfachen Herstellung, einfachen Montage und eines schnellen und einfachen Plattenwechsels.

Mit der Erfindung wird als wesentliche Lösung auch vorgeschlagen, daß die Fixierung des Tragbolzens gegen Axialverschiebung mittels Magneten erfolgt. So kann der Tragbolzen selbst magnetisierbar und in ein magnetisierbares Stirnsegment oder ein Magneten aufweisendes Stirnsegment eingesetzt sein. Auch kann der Tragbolzen als Hohlbolzen ausgebildet sein, der antimagnetisch ist, und einen im Inneren des Hohlbolzens positionierbaren magnetisierbaren Bolzen aufweisen, der beispielsweise als Permanentmagnet ausgebildet sein kann. Durch diesen Aspekt der Erfindung ergeben sich eine Vielzahl von einfachen Fixierungsmöglichkeiten.

Weitere Vorteile und Merkmale der Erfindung ergeben sich aus der folgenden Beschreibung anhand der Figuren. Dabei zeigen:
- Fig. 1: eine schematische Draufsicht auf ein Segment eines Plattenförderbandes;
- Fig. 2: eine schematische teilgeschnittene Draufsicht auf eine Seite einer Reihe von Stirnsegmenten;
- Fig. 3: eine perspektivische Darstellung eines Stirnsegmentes;
- Fig. 4: eine Darstellung eines Stirnsegmentes gemäß Fig. 3 im Schnitt;
- Fig. 5: eine Darstellung eines Stirnsegmentes gemäß Fig. 3 aus einer anderen Perspektive;
- Fig. 6: eine schematische teilgeschnittene Ansicht eines Ausführungsbeispiels der Erfindung;
- Fig. 7: eine schematische teilgeschnittene Ansicht eines weiteren Ausführungsbeispiels;
- Fig. 8: eine schematische teilgeschnittene Ansicht einer Seitenkante eines Plattenförderbandes gemäß einem weiteren Ausführungsbeispiel der Erfindung;
- Fig. 9: eine schematische teilgeschnittene Ansicht eines weiteren Ausführungsbeispiels der Erfindung und
- Fig. 10: eine schematische teilgeschnittene Ansicht eines weiteren Ausführungsbeispiels der Erfindung.

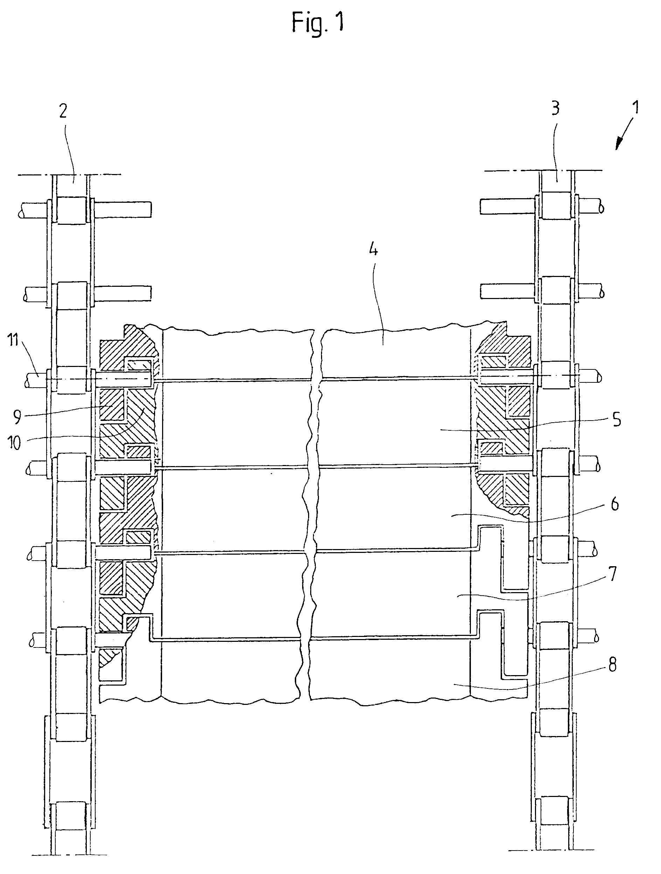

Fig. 1 zeigt schematisch in Draufsicht ein Plattenförderband 1, bei welchem an beiden Seitenkanten Ketten 2, 3 als Endlosketten geführt und durch einen nicht gezeigten Antrieb angetrieben sind. Die Ketten bestehen aus benachbarten Gliedern, die mittels nicht erkennbarer Hohlbolzen verbunden sind. Zwischen den beiden Ketten 2 und 3 sind im gezeigten Ausführungsbeispiel Platten 4, 5, 6, 7 und 8 gezeigt, die sich an jeder Lagerstelle durch eine Überdeckungskante 9 in dem Stirnkantenbereich einer Platte und dem Einschnitt 10 in dem Stirnkantenbereich der benachbarten Platte überdecken. In diesem Überdeckungsbereich sind fluchtende Bohrungen ausgebildet, in welchen Tragbolzen 11 aufgenommen sind. Diese Tragbolzen 11 sind gleichzeitig in den Hohlbolzen der Ketten 2 bzw. 3 gelagert.

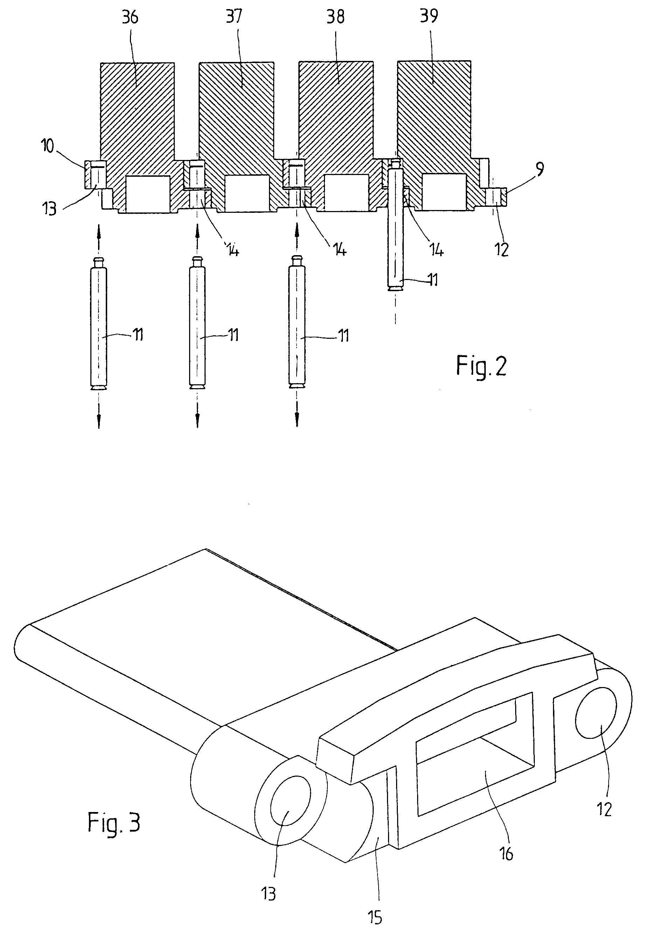

Eine entsprechende detailliertere Ansicht des Lagerbereiches ist in Fig. 2 gezeigt, wo benachbart die Stirnsegmente 36, 37, 38 und 39 in geschnittener Darstellung gezeigt sind. Die Tragbolzen 11 werden jeweils in die fluchtenden Bohrungen im Überdeckungsbereich 9 und 10, die eine Art Scharnierüberdeckung 14 bilden, jeweils benachbarter Stirnsegmente eingeschoben, wozu die fluchtenden Bohrungen 12 und 13 in der Überdeckungskante 9 bzw. in dem Einschnitt 10 ausgebildet sind. Im Sinne der Erfindung ist die Bohrung 12, also die jeweils der Kette am nächsten liegende Bohrung, so bemessen, daß der Tragbolzen 11 in einer Spielpassung in dieser Bohrung sitzt. Demgegenüber ist die zum Stirnsegmentinneren hin liegende Bohrung 13 jeweils so ausgebildet, daß der Tragbolzen 11 in Axialrichtung fixiert ist, wenn er in die Bohrung 13 eingeschoben ist.

Figuren 3, 4 und 5 zeigen Stirnsegmente, die jeweils am Ende einer Platte 4, 5, 6, 7 oder 8 ausgebildet oder als separates Segment angeordnet sein können.

Es zeigt sich, daß die Segmente mit Radien versehene Seitenkanten besitzen, und zwar an einer Seite im vorderen Stirnkantenbereich, auf der anderen Seite im hinteren Stirnkantenbereich. Die Längen dieser Seitenkantenbereichen auf beiden Seiten sind so bemessen, daß beide zueinander fluchtend sich überdeckend angeordnet werden können. Im zwischen den Seitenkanten liegenden Stirnsegmentbereich kann eine Aussparung 15 ausgebildet sein, beispielsweise aus Gewichtsgründen. Um eine einfache Verschwenkbarkeit nebeneinanderliegender Platten zu gewährleisten, sind die ausgesparten Seitenkantenbereiche mit negativen Radien versehen. In den ausgebildeten Seitenkantenbereichen sind Spielpassungsbohrungen 12 bzw. Preßpassungsbohrungen 13 ausgebildet.

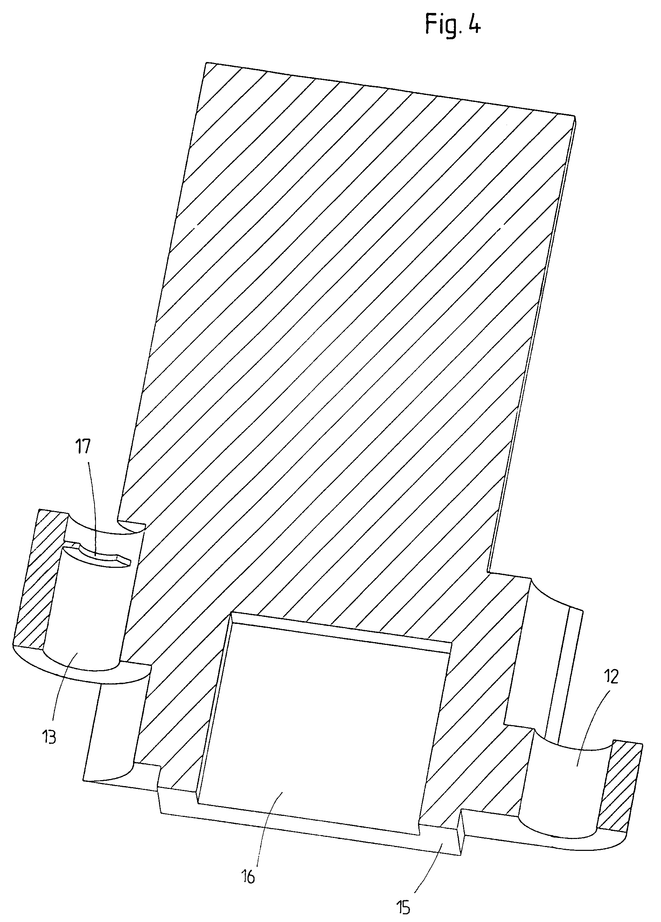

In Fig. 4 ist als Ausführungsbeispiel für eine Preßpassung die Anordnung eines Klemmsteges 17 innerhalb der jeweils zum Platteninneren liegenden Bohrung 13 gezeigt. Dieser Klemmsteg ist als Stegsegment ausgebildet, so daß sich ein eingesetzter Tragbolzen auch ohne Zerstörung des Klemmsteges aus dem Loch auslösen läßt.

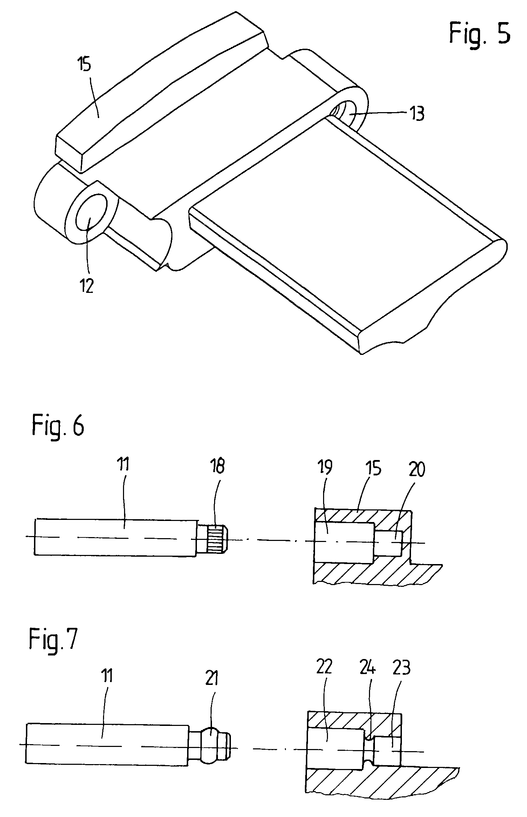

In den Figuren 6 und 7 sind nicht beschränkende Ausführungsbeispiele für die Ausbildung von Preßpassungen gezeigt. Fig. 6 zeigt die Ausbildung einer als Sacklochbohrung ausgeführten Bohrung 20 am Ende einer normal als Spielpassung oder als Normalpassung ausgeführten Bohrung 19. Die Preßpassung läßt sich vereinfacht noch dadurch herstellen, daß das Ende des Tragbolzens 11 mit einer Rändelung 18 versehen ist, die im gezeigten Ausführungsbeispiel an einem verjüngten Tragbolzenende ausgebildet ist. Durch diese Maßnahme können große Toleranzen bei der Herstellung zugelassen und ein einfaches Wiederauslösen gewährleistet werden.

Fig. 7 zeigt ein Ausführungsbeispiel, wobei am verjüngten Ende des Tragbolzens 11 eine Verdickung 21 ausgebildet ist. In der Bohrung 22 in einem hinteren Stirnkantenbereich ist eine Hinterschneidung 24 und eine dahinterliegende Preßpassungsbohrung 23 ausgebildet. Auch hier läßt sich der Tragbolzen 11 unter Preßpassung fixieren, jedoch wieder auslösen.

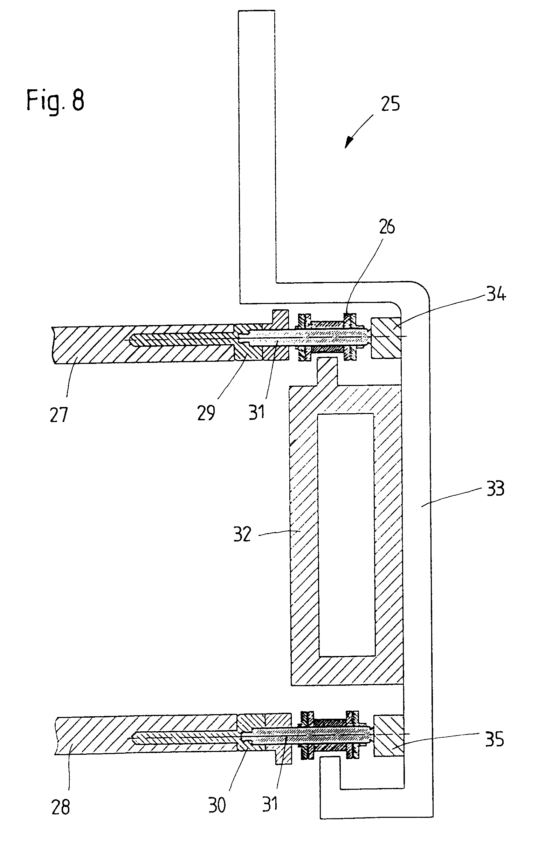

Die Fig. 8 zeigt als besonderes Ausführungsbeispiel einen Teil eines Plattenförderbandes 25, wobei eine Kette 26, bestehend aus benachbarten Gliedern, die durch nicht gezeigte Hohlbolzen miteinander verbunden sind, durch einen nicht gezeigten Antrieb als Endloskette angetrieben wird. Platten 27, 28 sind mit Stirnsegmenten 29, 30 versehen, sei es einstückig oder mehrteilig, und mittels in die Hohlbolzen eingeschobener Tragbolzen 31 lösbar gegenüber der Kette gelagert. Die Tragbolzen 31 sind in erfindungsgemäßer Weise in jeweils einem Bereich der stirnsegmentseitigen Bohrungen fixiert. Die Oberkette ist im gezeigten Ausführungsbeispiel auf einem Tragholmprofil 32 gelagert. Weiterhin ist eine Seitenverkleidung 33 gezeigt, die in einfacher Weise am Tragholmprofil angeordnet ist und auch den Obertrumrahmen aufweist. Im gezeigten Ausführungsbeispiel sind die Tragbolzen 31 so ausgebildet, daß sie am freien Ende jenseits der Platten aus dem Hohlbolzen herausragen und dort in einem Führungsprofil 34, 35 geführt sind.

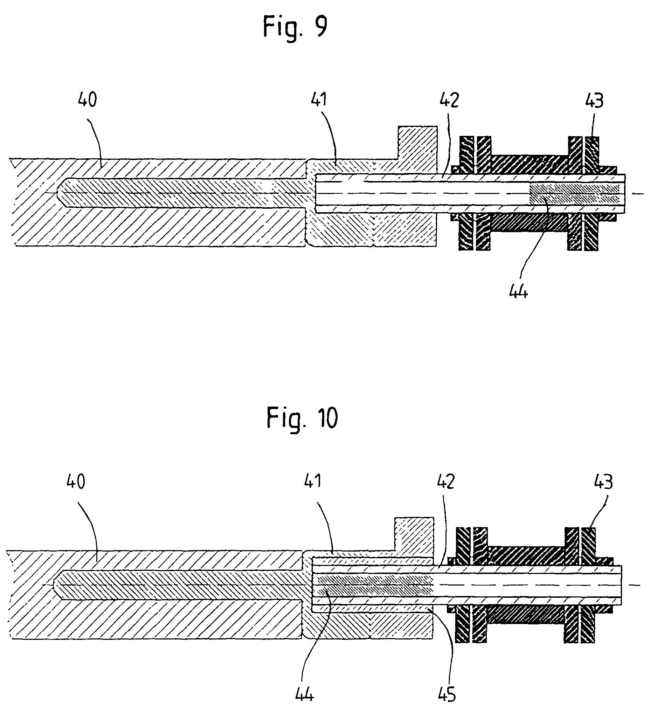

In den Figuren 9 und 10 ist ein weiteres Ausführungsbeispiel der Erfindung gezeigt, wobei eine Platte 40 ein Stirnsegment 41 aufweist und mit einer Kette 43 über einen lösbaren Hohlbolzen 42 verbunden ist. In den gezeigten Ausführungsbeispielen wird davon ausgegangen, daß der Hohlbolzen antimagnetisch ist. In dem in Figur 9 gezeigten Ausführungsbeispiel ist ein magnetisierbarer Bolzen 44, beispielsweise ein Permanent-Magnetbolzen, in den Hohlbolzen eingepreßt und wirkt mit einer magnetisierbaren Kette zusammen. In dem in Figur 10 gezeigten Ausführungsbeispiel wirkt der Permanent-Magnetbolzen 44 mit dem Stirnsegment 41 zusammen, welches zu diesem Zwecke mit einer magnetisierbaren Hülse 45 versehen ist. Der Magnetbolzen 44 kann mit Mitteln zur Längsverschiebung versehen sein, die auch ein Herausziehen des Bolzens ermöglichen, so beispielsweise Ösen und dergleichen.

### Bezugszeichenliste

- 1: Plattenförderband
- 2: Kette
- 3: Kette
- 4: Platte
- 5: Platte
- 6: Platte
- 7: Platte
- 8: Platte
- 9: Überdeckungskante
- 10: Einschnitt
- 11: Tragbolzen
- 12: Bohrung
- 13: Bohrung
- 14: Scharnierüberdeckung
- 15: Stirnsegment
- 16: Aussparung
- 17: Klemmsteg
- 18: Rändelung
- 19: Bohrung
- 20: Bohrung
- 21: Verdickung
- 22: Bohrung
- 23: Bohrung
- 24: Hinterschneidung
- 25: Plattenförderband
- 26: Kette
- 27: Platte
- 28: Platte
- 29: Stirnsegment
- 30: Stirnsegment
- 31: Tragbolzen
- 32: Tragholmprofil
- 33: Verkleidung
- 34: Führungsprofil
- 35: Führungsprofil
- 36: Stirnsegment
- 37: Stirnsegment
- 38: Stirnsegment
- 39: Stirnsegment
- 40: Platte
- 41: Stirnsegment
- 42: Hohlbolzen
- 43: Kette
- 44: Magnetbolzen
- 45: Hülse

## Patentansprüche

1. Plattenförderband mit mindestens zwei endlos umlaufenden Ketten (2, 3) aus mittels als Hohlbolzen ausgebildeten Gelenkbolzen verbundenen benachbarten Kettengliedern, und mit an den Ketten (2, 3) mittels Tragbolzen (11) lösbar gelagerten Lastträgern, vorzugsweise Tragplatten (4, 5, 6), wobei die Tragbolzen (11) durch die Hohlbolzen hindurchgeführt und in im Tragplattenstirnkantenbereich (15) ausgebildete Bohrungen (12, 13) eingesetzt sind,
**dadurch gekennzeichnet**,
daß die Tragbolzen (11) in wenigstens einem Bereich der Bohrungen wenigstens gegen Verschiebungen in axialer Richtung fixiert sind.

2. Plattenförderband nach Anspruch 1, dadurch gekennzeichnet, daß die Fixierung durch einen Preßsitz erfolgt.

3. Plattenförderband nach einem der vorhergehenden Ansprüche, dadurch gekennzeichnet, daß die Tragbolzen mit einer Rändelung versehen sind.

4. Plattenförderband nach einem der vorhergehenden Ansprüche, dadurch gekennzeichnet, daß in wenigstens einer der Bohrungen ein Klemmsteg ausgebildet ist.

5. Plattenförderband nach einem der vorhergehenden Ansprüche, dadurch gekennzeichnet, daß am Tragbolzen eine Verdickung ausgebildet ist, die mit einer bohrungsseitigen Hinterschneidung zusammenwirkt.

6. Plattenförderband nach Anspruch 5, dadurch gekennzeichnet, daß die Hinterschneidung als Hinterschneidungssegment ausgebildet ist.

7. Plattenförderband nach einem der vorhergehenden Ansprüche, dadurch gekennzeichnet, daß der Tragbolzen mit seinem freien Ende aus dem Hohlbolzen herausragt.

8. Plattenförderband nach Anspruch 7, dadurch gekennzeichnet, daß der Tragbolzen (11) mit seinem freien Ende in einer Kulissenbahn geführt ist.

9. Plattenförderband nach Anspruch 8, dadurch gekennzeichnet, daß die Kulissenbahn in einem Führungselement ausgebildet ist.

10. Plattenförderband nach Anspruch 9, dadurch gekennzeichnet, daß das Führungselement an einer Seitenverkleidung angeordnet ist.

11. Plattenförderband nach einem der vorhergehenden Ansprüche, dadurch gekennzeichnet, daß die Tragplatten im Trennfugenbereich zumindest im Stirnsegment scharnierartig überdcckt sind und fluchtende Bohrungen für Tragbolzen aufweisen.

12. Plattenförderband nach Anspruch 11, dadurch gekennzeichnet, daß die Fixierung in wenigstens einer der Bohrungen erfolgt.

13. Plattenförderband nach einem der Ansprüche 11 oder 12, dadurch gekennzeichnet, daß die Fixierung in der von der Kette ausgesehen entferntesten Bohrung erfolgt.

14. Plattenförderband nach einem der vorhergehenden Ansprüche, dadurch gekennzeichnet, daß die Bohrungen in einem Stirnsegment ausgebildet sind.

15. Plattenförderband nach einem der vorhergehenden Ansprüche, dadurch gekennzeichnet, daß die Fixierung des Tragbolzens mittels Magneten erfolgt.

16. Plattenförderband nach Anspruch 15, dadurch gekennzeichnet, daß der Tragbolzen magnetisch ist.

17. Plattenförderband nach einem der Ansprüche 15 oder 16, dadurch gekennzeichnet, daß der Tragbolzen ein Hohlbolzen ist.

18. Plattenförderband nach Anspruch 17, dadurch gekennzeichnet, daß der Hohlbolzen antimagnetisch ist und wenigstens einen eingepreßten magnetisierbaren Bolzen aufweist.
